# EUROPEAN PATENT APPLICATION

(11) **EP 3 579 559 A1**
(43) Date of publication of application: **11.12.2019**
(21) Application number: 18747096.8
(22) Date of filing: 31.01.2018
(51) Int. Cl.: H04N 19/33, H04N 19/30, H04N 19/70, H04N 21/2662, H04N 21/462

(54) **TRANSMISSION DEVICE, TRANSMISSION METHOD, RECEPTION DEVICE, AND RECEPTION METHOD**

(30) Priority: 03.02.2017 JP 2017018916
(71) Applicant: Sony Corporation, Tokyo 108-0075 (JP)
(72) Inventor: TSUKAGOSHI, Ikuo, Tokyo 108-0075 (JP)
(74) Representative: 2SPL Patentanwälte PartG mbB
(86) International application number: PCT/JP2018/003197
(87) International publication number: WO 2018/143268

(57) **Abstract**

To improve coding efficiency in encoding and transmitting image data of a base layer and an enhancement layer.

The image data of each picture of the base layer is encoded to generate a first coded stream. The image data of each picture of the enhancement layer is encoded to generate a second coded stream. A container including the streams is transmitted. A picture of the base layer can be used as a reference picture in encoding the image data of each picture of the enhancement layer, and conversion processing for causing the image data of the base layer to correspond to the image data of the enhancement layer is applied to a block of the reference picture to perform motion compensation prediction coding processing when the picture of the base layer is used as the reference picture.

## Description

### TECHNICAL FIELD

The present technology relates to a transmission device, a transmission method, a reception device, and a reception method, and relates to a transmission device that encodes and transmits image data of a base layer and an enhancement layer, and the like.

### BACKGROUND ART

Conventionally, transmitting high-quality format image data together with basic format image data, and selectively using the basic format image data or the high-quality format image data on a reception side is known. For example, Patent Document 1 describes performing media coding in a scalable manner to generate a coded stream of a base layer for a low-resolution video service and a coded stream of an enhancement layer for a high-resolution video service, and transmitting a container including the coded streams. Note that the high-quality format includes a high dynamic range, a wide color gamut, a high bit length, and the like, in addition to the high resolution.

### CITATION LIST

### PATENT DOCUMENT

Patent Document 1: Japanese PCT National Publication No. 2008-543142

### SUMMARY OF THE INVENTION

### PROBLEMS TO BE SOLVED BY THE INVENTION

In conventional scalable coding such as scalability extension of HEVC (SHVC), interlayer prediction is limited to only between pictures in the same picture order of composition (POC). Moreover, motion compensation is not applied to the prediction and corresponds only to interlayer prediction between blocks at the same spatial relative position of an image. Therefore, there is a problem that coding efficiency is reduced.

An object of the present technology is to improve coding efficiency in encoding and transmitting image data of a base layer and an enhancement layer.

### SOLUTIONS TO PROBLEMS

A concept of the present technology resides in
a transmission device including:
an image coding unit configured to encode image data of each picture of a base layer to generate a first coded stream and encode image data of each picture of an enhancement layer to generate a second coded stream; and
a transmission unit configured to transmit a container including the first coded stream and the second coded stream, in which
the image coding unit
is able to use a picture of the base layer as a reference picture in encoding the image data of each picture of the enhancement layer, and
applies conversion processing for causing the image data of the base layer to correspond to the image data of the enhancement layer to a block of the reference picture to perform motion compensation prediction coding processing when using the picture of the base layer as the reference picture.

In the present technology, the image coding unit encodes the image data of each picture of the base layer to generate the first coded stream and encodes the image data of each picture of the enhancement layer to generate the second coded stream. For example, the image data of each picture of the enhancement layer may include image data of a picture having different display timing from each picture of the base layer. The transmission unit transmits the container including the first coded stream and the second coded stream.

The image coding unit can use a picture of the base layer as the reference picture when encoding the image data of each picture of the enhancement layer. Then, when using the picture of the base layer as the reference picture, the image coding unit applies the conversion processing for causing the image data of the base layer to correspond to the image data of the enhancement layer to a block of the reference picture to perform motion compensation prediction coding processing.

For example, the image data of the base layer may be image data of a first resolution, and the image data of the enhancement layer may be image data of a second resolution larger than the first resolution, and the image coding unit may perform, as the conversion processing, scaling processing of changing a resolution of a reference block in the reference picture from the first resolution to the second resolution.

In this case, for example, the image coding unit may further perform, as the conversion processing, shaping processing of correcting a blunt edge of an image, for the scaled image data. By this shaping processing, blurring of the edge of the image due to the scaling processing can be reduced, and the effect of the block matching processing for obtaining a motion vector can be enhanced.

Furthermore, for example, the first resolution may be an HD resolution and the second resolution may be a UHD resolution. In this case, for example, the UHD resolution is a 4K resolution, and the image coding unit may be configured to perform block matching processing using the scaled reference block, for each vector block configured by two-dimensionally adjacent 2 × 2 four prediction blocks of a picture of the enhancement layer to determine a first motion vector, and perform block matching processing with each of the four prediction blocks in the scaled reference block to determine a second motion vector corresponding to each of the prediction blocks, and performs the motion compensation prediction coding processing. With the configuration, the motion vector corresponding to each prediction block can be obtained with high precision, and the coding efficiency can be improved.

Furthermore, for example, the image data of the base layer may be image data of a first dynamic range, and the image data of the enhancement layer may be image data of a second dynamic range wider than the first dynamic range, and the image coding unit may perform, as the conversion processing, processing of converting a pixel value of the block of the reference picture to correspond to a pixel value of the second dynamic range.

As described above, in the present technology, when a picture of the base layer is used as the reference picture in encoding the image data of each picture of the enhancement layer, the conversion processing for causing the image data of the base layer to correspond to the image data of the enhancement layer is applied to a block of the reference picture to perform the motion compensation prediction coding processing. Therefore, the reference block can be determined with high precision, and the coding efficiency can be improved.

Furthermore, another concept of the present technology resides in
a reception device including:
a reception unit configured to receive a container including a first coded stream obtained by encoding image data of each picture of a base layer and a second coded stream obtained by encoding image data of each picture of an enhancement layer, in which
a picture of the base layer is able to be used as a reference picture in encoding the image data of each picture of the enhancement layer, and conversion processing for causing the image data of the base layer to correspond to the image data of the enhancement layer is applied to a block of the reference picture to perform motion compensation prediction coding processing when the picture of the base layer is used as the reference picture, and
the reception device further includes
a processing unit configured to process the first coded stream, or the first coded stream and the second coded stream, according to display capability, to obtain display image data.

In the present technology, the reception unit receives the container including the first coded stream and the second coded stream. The first coded stream is obtained by encoding image data of each picture of a base layer. The second coded stream is obtained by encoding image data of each picture of an enhancement layer.

A picture of the base layer can be used as the reference picture in encoding the image data of each picture of the enhancement layer, and when the picture of the base layer is used as the reference picture, the conversion processing for causing the image data of the base layer to correspond to the image data of the enhancement layer is applied to a block of the reference picture to perform the motion compensation prediction coding processing.

The processing unit processes the first coded stream or the first coded stream and the second coded stream according to display capability to obtain display image data. In this case, decoding processing is applied to the first coded stream to obtain the image data of the base layer, and decoding processing is applied to the second coded stream to obtain the image data of the enhancement layer.

### EFFECTS OF THE INVENTION

According to the present technology, the coding efficiency in encoding and transmitting image data of a base layer and an enhancement layer can be improved. Note that the effects described here are not necessarily limited, and any of effects described in the present disclosure may be exerted.

### BRIEF DESCRIPTION OF DRAWINGS

Fig. 1 is a block diagram illustrating a configuration example of a transmission/reception system as an embodiment.
Fig. 2 is a diagram illustrating configuration examples of image data of a base layer and an enhancement layer.
Fig. 3 is a diagram illustrating other configuration examples of the image data of the base layer and the enhancement layer.
Fig. 4 is a block diagram illustrating a configuration example of a transmission device.
Fig. 5 is a block diagram illustrating a configuration example of main parts of an encoding unit.
Fig. 6 is a diagram for describing motion prediction between layers (first motion prediction) in an interlayer prediction unit.
Fig. 7 is a diagram schematically illustrating scaling processing and shaping processing.
Fig. 8 is a diagram for describing motion prediction (second motion prediction) in a large block.
Fig. 9 is a diagram illustrating a more specific configuration example of a video encoder.
Fig. 10 is diagrams illustrating a structure example of a NAL unit of a slice that contains coded data and a structure example of a slice segment header.
Fig. 11 is a diagram illustrating a structure example of slice segment data.
Fig. 12 is a diagram illustrating a structure example of fields of "vector_prediction_unit()" and "micro_prediction_unit()".
Fig. 13 is a diagram illustrating a structure example of a field of "prediction_unit2()".
Fig. 14 is a diagram illustrating content of main information in each structure example.
Fig. 15 is a block diagram illustrating a configuration example of a reception device.
Fig. 16 is a block diagram illustrating a configuration example of main parts of a decoding unit.
Fig. 17 is a diagram illustrating a more specific configuration example of a video decoder.
Fig. 18 is a diagram illustrating HDR characteristics and SDR characteristics.

### MODE FOR CARRYING OUT THE INVENTION

Hereinafter, a mode for implementing the present invention (hereinafter referred to as an "embodiment") will be described. Note that the description will be given in the following order.
1. Embodiment
2. Modification

### <1. Embodiment>

### [Transmission/reception system]

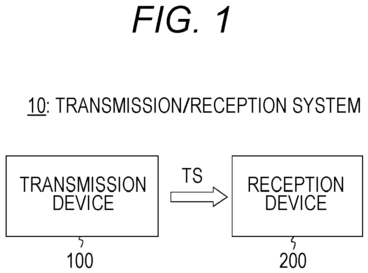

Fig. 1 illustrates a configuration example of a transmission/reception system 10 as an embodiment. The transmission/reception system 10 has a configuration including a transmission device 100 and a reception device 200.

The transmission device 100 transmits a transport stream TS as a container on a broadcast wave. The transport stream TS includes a first coded stream and a second coded stream. The first coded stream is obtained by encoding image data of each picture of a base layer. The second coded stream is obtained by encoding image data of each picture of an enhancement layer.

In this embodiment, the image data of the base layer is image data of an HD resolution and 120 fps or image data of an HD resolution and 60 fps, and the image data of the enhancement layer is image data of a UHD resolution (4K resolution, 8K resolution, or the like), here, 4K resolution and 120 fps.

Here, the 4K resolution is a resolution of about 4000 horizontal pixels × about 2000 vertical pixels, and is, for example, 4096 × 2160 or 3840 × 2160. The 8K resolution is a resolution in which the vertical and horizontal pixels are twice the 4K resolution. Furthermore, the HD resolution is a resolution in which the vertical and horizontal pixels are half the 4K resolution, for example.

In encoding the image data of each picture of the enhancement layer, a picture of the base layer can be used as a reference picture. Then, when the picture of the base layer is used as the reference picture, conversion processing for causing the image data of the base layer to correspond to the image data of the enhancement layer is applied to a block of the reference picture to perform motion compensation prediction coding.

In this embodiment, as the conversion processing, scaling processing of changing a resolution of the block of the reference picture from the HD resolution to the 4K resolution is performed. Furthermore, in this embodiment, as the conversion processing, shaping processing of correcting a blunt edge of an image is further performed for the scaled image data. By the shaping processing, blurring of the edge of the image due to the scaling processing is reduced, and precision of block matching processing for obtaining a motion vector is enhanced.

In the motion compensation prediction coding, block matching processing using the scaled reference block is performed for each vector block configured by two-dimensionally adjacent 2 × 2 four prediction blocks of a picture of the enhancement layer to determine a first motion vector. Furthermore, block matching processing is performed with each of the four prediction blocks in the scaled reference block to determine a second motion vector (micro vector). Thereby, the motion vector corresponding to each prediction block can be obtained with high precision, and the coding efficiency can be improved.

The reception device 200 receives the above-described transport stream TS sent from the transmission device 100 on the broadcast wave. As described above, the transport stream TS includes the first coded stream regarding the image data of the HD resolution and 60 fps and the second coded stream regarding the image data of the 4K resolution and 120 fps.

The reception device 200 processes the first coded stream to obtain display image data of the HD resolution and 60 fps and displays an image in a case where the reception device 200 has display capability of the HD resolution at 60 fps. Meanwhile, the reception device 200 processes the first coded stream and the second coded stream to obtain display image data of the 4K resolution and 120 fps and displays an image in a case where the reception device 200 has display capability of the 4K resolution at 120 fps.

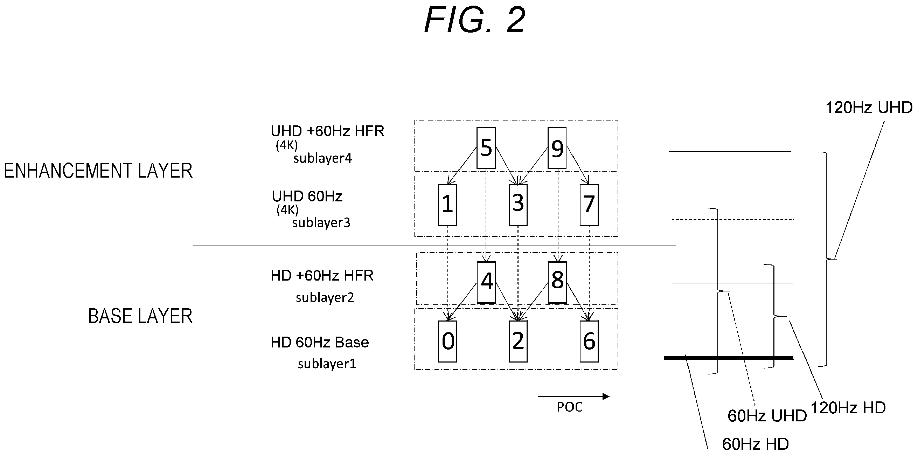

Fig. 2 illustrates configuration examples of image data of the base layer and the enhancement layer. In the illustrated example, the horizontal axis represents a display order (picture order of composition (POC)), and an earlier display time comes to the left side and a later display time comes to the right side. Each rectangular frame represents a picture, and a number represents an encoding order (decoding order on the reception side). Furthermore, an arrow represents an example of a reference relationship of pictures in prediction coding processing, a solid line represents a reference relationship in a layer, and a broken line represents a reference relationship between layers. A target picture changes for each block in both interlayer and intralayer predictions. Furthermore, the direction of the prediction and the number of references are not limited to the illustrated examples. Note that display of a reference relationship in a sublayer is omitted.

First image data "HD 60 Hz Base" exists as the image data of the base layer. The first image data is image data configuring a sublayer 1 and is image data configuring 60 Hz as a base. Furthermore, second image data "HD +60 Hz HFR" exists as the image data of the base layer. The second image data is image data configuring a sublayer 2 and has scalability in a time direction with respect to the first image data "HD 60 Hz Base".

Furthermore, third image data "UHD (4K) 60 Hz" exists as the image data of the enhancement layer. The third image data is image data configuring a sublayer 3 and is image data configuring 60 Hz as a base. The third image data has the scalability in a spatial direction with respect to the first image data "HD 60 Hz Base". Furthermore, fourth image data "UHD (4K) +60 Hz HFR" exists as the image data of the enhancement layer. The fourth image data is image data configuring a sublayer 4 and has scalability in the time direction with respect to the third image data "UHD (4K) 60 Hz" and has scalability in a spatial direction with respect to the second image data "HD +60 Hz HFR".

In this configuration example, a high-resolution (HD) image (60 Hz HD image) can be reproduced at a basic frame rate on the basis of the first image data "HD 60 Hz Base". Furthermore, a high-resolution (HD) image (120 Hz HD image) can be reproduced at a high frame rate on the basis of the first image data "HD 60 Hz Base" and the second image data "HD +60 Hz HFR".

Furthermore, an ultra high-resolution (UHD (4K)) image (60 Hz UHD image) can be reproduced at a basic frame rate on the basis of the first image data "HD 60 Hz Base" and the third image data "UHD (4K) 60 Hz". Furthermore, an ultra high-resolution (UHD (4K)) image (120 Hz UHD image) can be reproduced at a high frame rate on the basis of the first image data "HD 60 Hz Base", the second image data "HD +60 Hz HFR", the third image data "UHD (4K) 60", and the fourth image data "UHD (4K) +60 Hz HFR".

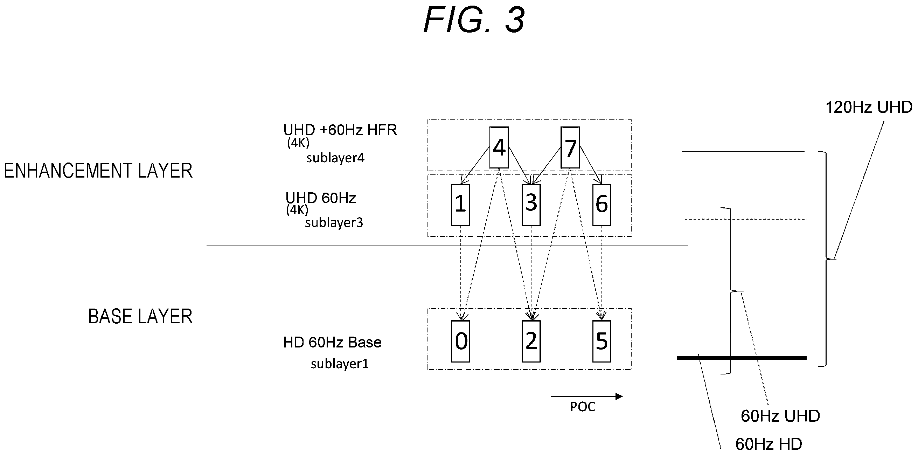

Fig. 3 illustrates other configuration examples of the image data of the base layer and the enhancement layer. In the illustrated example, the horizontal axis represents a display order (picture order of composition (POC)), and an earlier display time comes to the left side and a later display time comes to the right side. Each rectangular frame represents a picture, and a number represents an encoding order (decoding order on the reception side). Furthermore, an arrow represents an example of a reference relationship of pictures in prediction coding processing, a solid line represents a reference relationship in a layer, and a broken line represents a reference relationship between layers. A target picture changes for each block in both interlayer and intralayer predictions. Furthermore, the direction of the prediction and the number of references are not limited to the illustrated examples. Note that display of a reference relationship in a sublayer is omitted.

This configuration example is similar to the above-described configuration example in Fig. 2 except that the second image data "HD +60 Hz HFR" does not exist as the image data of the base layer. In this configuration example, a high-resolution (HD) image (60 Hz HD image) can be reproduced at a basic frame rate on the basis of the first image data "HD 60 Hz Base". In this configuration example, the image data of each picture of the enhancement layer includes image data of a picture having different display timing from each picture of the base layer.

Furthermore, an ultra high-resolution (UHD (4K)) image (60 Hz UHD image) can be reproduced at a basic frame rate on the basis of the first image data "HD 60 Hz Base" and the third image data "UHD (4K) 60 Hz". Furthermore, an ultra high-resolution (UHD (4K)) image (120 Hz UHD image) can be reproduced at a high frame rate on the basis of the first image data "HD 60 Hz Base", the third image data "UHD (4K) 60", and the fourth image data "UHD (4K) +60 Hz HFR".

### [Configuration of Transmission Device]

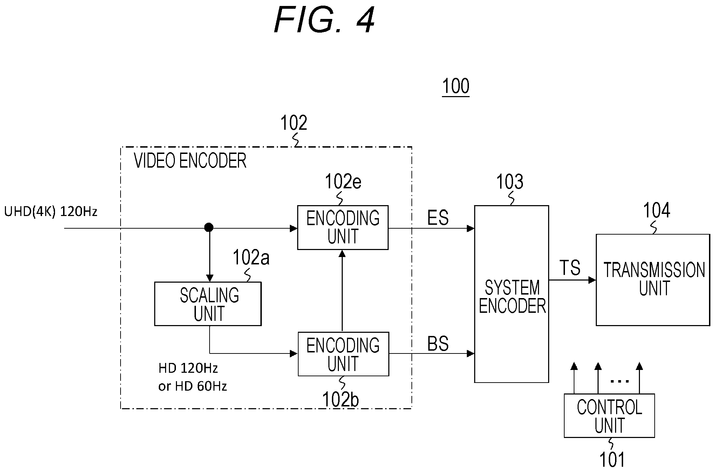

Fig. 4 illustrates a configuration example of the transmission device 100. The transmission device 100 includes a control unit 101, a video encoder 102, a system encoder 103, and a transmission unit 104. The control unit 101 includes a central processing unit(CPU), and controls operation of each unit of the transmission device 100 on the basis of a control program.

The video encoder 102 inputs the image data of the 4K resolution and 120 fps, and outputs the first coded stream BS obtained by encoding the image data of each picture of the base layer and outputs the second coded stream ES obtained by encoding the image data of each picture of the enhancement layer. Here, the image data of the 4K resolution and 120 fps includes the third image data "UHD 60 Hz" and the fourth image data "UHD +60 Hz HFR" described above, and configures the image data of the enhancement layer.

The video encoder 102 includes a scaling unit 102a, an encoding unit 102b, and an encoding unit 102e. The scaling unit 102a applies scaling processing to the image data of the 4K resolution to obtain the image data of the base layer.

Here, in a case where the configuration of the base layer is the configuration example illustrated in Fig. 2, the scaling unit 102a applies scaling processing in the spatial direction to the image data of the UHD resolution to obtain the image data of the HD resolution and 120 fps. This image data of the HD resolution and 120 fps includes the first image data "HD 60 Hz Base" and the second image data "HD +60 Hz HFR" described above.

Meanwhile, in a case where the configuration of the base layer is the configuration example illustrated in Fig. 3, the scaling unit 102a applies scaling processing in the in the spatial direction and the temporal direction to the image data of the UHD resolution to obtain the image data of the HD resolution and 60 fps. This image data of the HD resolution and 60 fps includes the first image data "HD 60 Hz Base" described above.

The encoding unit 102b applies motion compensation prediction coding processing such as H.264/AVC or H.265/HEVC to the image data of the base layer obtained in the scaling unit 102a to obtain coded image data and generates the first coded stream BS having the coded image data.

The encoding unit 102e performs intralayer and interlayer motion compensation prediction coding processing such as H.264/AVC, H.265/HEVC to the image data of the UHD resolution and 120 fps, that is, the image data of the enhancement layer, to obtain coded image data, and generates the second coded stream ES having the coded image data.

In this case, the encoding unit 102e can use a picture of the base layer as the reference picture in encoding the image data of each picture of the enhancement layer. In this case, the encoding unit 102e selectively performs prediction in the enhancement layer or prediction between the enhancement layer and the base layer for each prediction block (coded block) to reduce a prediction residual.

When using a picture of the base layer as the reference picture, the encoding unit 102e performs conversion processing of causing the image data of the base layer to correspond to the image data of the enhancement layer, to the reference block in the reference picture to perform the motion compensation prediction coding processing.

The conversion processing is scaling processing of changing the resolution of a block of the reference picture from the HD resolution to the UHD resolution. Note that, in this embodiment, the conversion processing further includes shaping processing of correcting a blunt edge of an image, for the scaled image data. By this shaping processing, blurring of the edge of the image due to the scaling processing can be reduced, and the effect of the block matching processing for obtaining a motion vector can be enhanced.

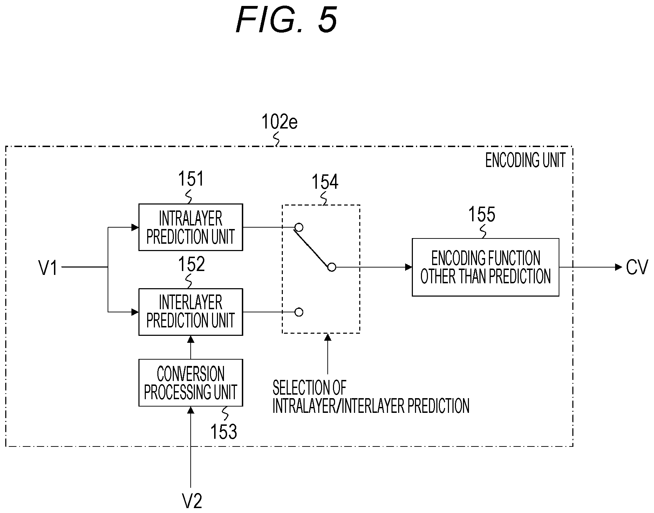

Fig. 5 illustrates a configuration example of main parts of the encoding unit 102e. The encoding unit 102e includes an intralayer prediction unit 151, an interlayer prediction unit 152, a conversion processing unit 153, a selection unit 154, and an encoding function unit 155.

The intralayer prediction unit 151 performs prediction in image data V1 of the enhancement layer (intralayer prediction) for the image data V1 to obtain prediction residual data. The interlayer prediction unit 152 performs prediction for the image data V1 of the enhancement layer with image data V2 of the base layer (interlayer prediction) to obtain prediction residual data.

The conversion processing unit 153 performs the above-described conversion processing (scaling processing and shaping processing) in order to efficiently perform the interlayer motion prediction in the interlayer prediction unit 152.

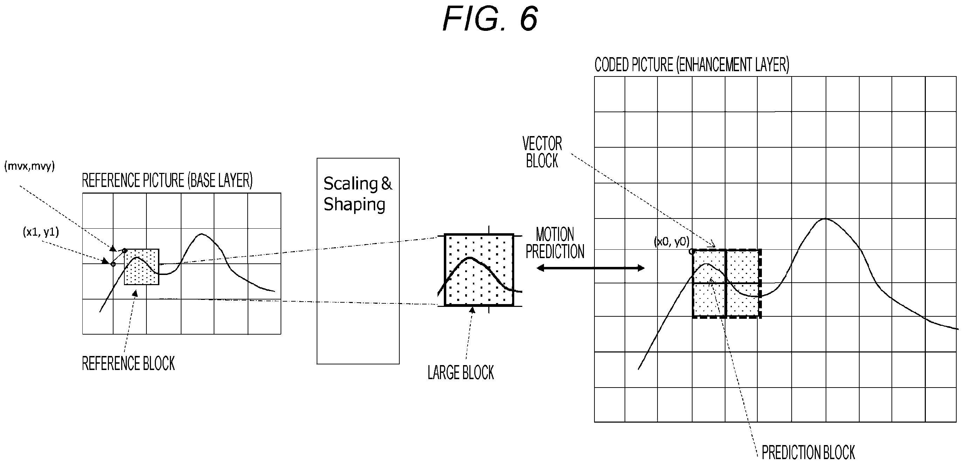

Fig. 6 illustrates a concept of motion prediction between layers (first motion prediction) in the interlayer prediction unit 152. One of two-dimensionally adjacent 2 × 2 four prediction blocks, of prediction blocks of a coded picture (a picture of the enhancement layer), is one vector block.

The interlayer prediction unit 152 performs, for each vector block, the block matching processing using the large block obtained by applying the scaling processing and the shaping processing to the reference block in the reference picture (a picture of the base layer). The interlayer prediction unit 152 performs a search such that residual component power (a sum of residual power components of the four prediction blocks) becomes minimum within a search range of the reference picture to determine an interlayer vector (first motion vector).

In this case, top-left origin coordinates of the vector block are (x0, y0). Then, a position of (x0, y0) converted into resolution coordinates of the reference picture is (x1, y1), and a two-dimensional vector (mvx, mvy) indicating the distance from (x1, y1) to the reference block with a value including the subpixel precision and based on the resolution of the reference picture is an interlayer motion vector.

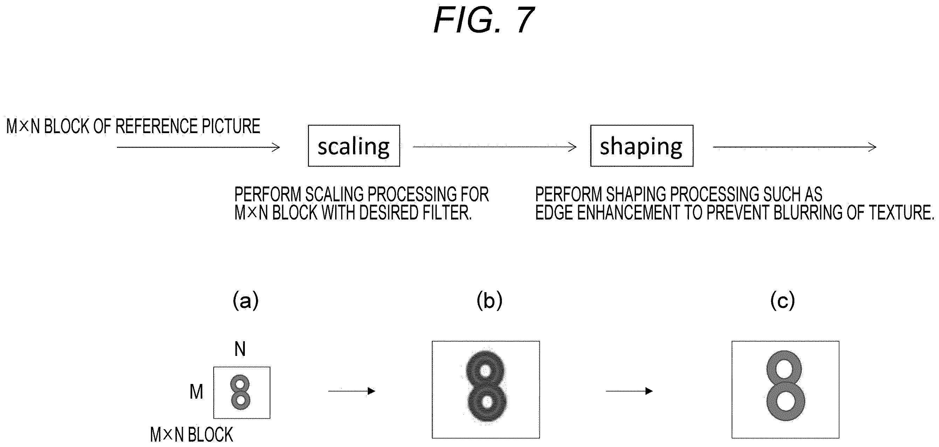

Fig. 7 schematically illustrates the scaling processing and the shaping processing. The scaling processing is applied with a desired filter to an M × N block (reference block) read from the reference picture. Next, the shaping processing such as edge enhancement for preventing blurring of texture is applied to the scaled block (large block).

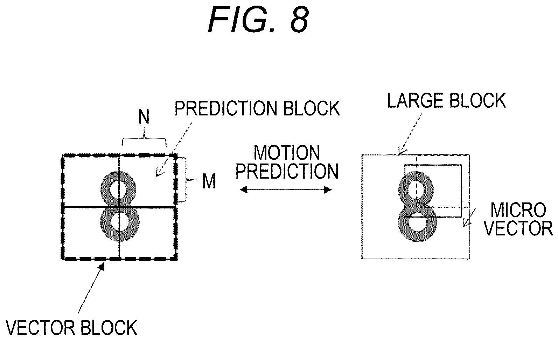

Furthermore, the interlayer prediction unit 152 further performs motion prediction in the large block (second motion prediction) with a micro vector, for each prediction block configuring the vector block of the enhancement layer, as illustrated in Fig. 8. In this case, the interlayer prediction unit 152 performs the block matching processing with each of the four prediction blocks configuring the vector block in the large block obtained by applying the scaling processing and the shaping processing to the reference block specified in the interlayer motion vector (first motion vector), to determine the micro vector (second motion vector) indicating a position where the prediction residual power becomes minimum in the large block, the position corresponding to each prediction block. This micro vector (second motion vector) is a two-dimensional interlayer motion vector based on the resolution of the coded picture and indicated by a value including the subpixel precision.

The interlayer prediction unit 152 performs the motion compensation prediction coding processing for each prediction block on the basis of results of the motion prediction between layers (first motion prediction) and the motion prediction in the large block (second motion prediction) described above. In this case, there are two pieces of motion vector information: the interlayer motion vector (first motion vector) and the micro vector (second motion vector).

Referring back to Fig. 4, the system encoder 103 performs PES packetization and TS packetization for the first coded stream BS and the second coded stream ES generated in the video encoder 102 to generate a transport stream TS. Then, the transmission unit 104 transmits the transport stream TS to the reception device 200, placing the transport stream TS on a broadcast wave or a net packet.

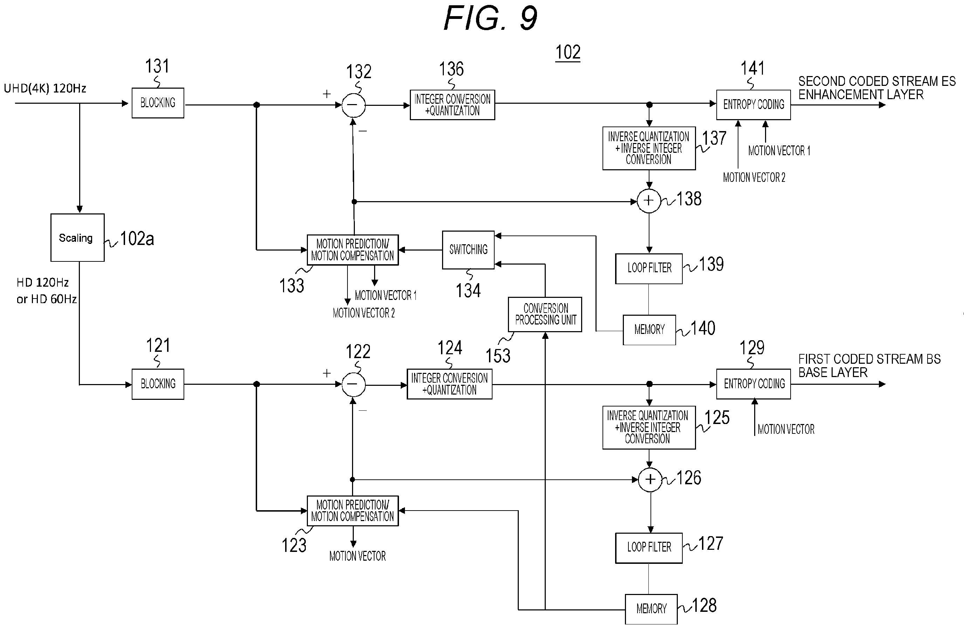

Fig. 9 illustrates a more specific configuration example of the video encoder 102. The video encoder 102 includes the scaling unit 102a, a blocking circuit 121, a subtractor circuit 122, a motion prediction/motion compensation circuit 123, an integer conversion/quantization circuit 124, an inverse quantization/inverse integer conversion circuit 125, an adder circuit 126, a loop filter 127, a memory 128, and an entropy coding circuit 129. Here, the blocking circuit 121 to the entropy coding circuit 129 configure the encoding unit 102b (see Fig. 4).

Furthermore, the video encoder 102 includes a blocking circuit 131, a subtractor circuit 132, a motion prediction/motion compensation circuit 133, a switching circuit 134, an integer conversion/quantization circuit 136, an inverse quantization/inverse integer conversion circuit 137, an adder circuit 138, a loop filter 139, a memory 140, an entropy coding circuit 141, and a conversion processing unit 153. Here, the blocking circuit 131 to the entropy coding circuit 141, and the conversion processing unit 153 configure the encoding unit 102e (see Fig. 4).

The image data of the UHD resolution and 120 fps input to the video encoder 102 is supplied to the scaling unit 102a. The scaling unit 102a applies the scaling processing to the image data of the UHD resolution and 120 fps to obtain the image data of the base layer. This image data of the base layer is the image data of the HD resolution and 120 fps (see Fig. 2) or the image data of the HD resolution and 60 fps (see Fig. 3).

The image data of the base layer obtained by the scaling unit 102a is supplied to the blocking circuit 121. In the blocking circuit 121, the image data of each picture of the base layer is divided into blocks (macroblocks (MBs)) in units of coding processing. Each block is sequentially supplied to the subtractor circuit 122. The motion prediction/motion compensation circuit 123 obtains a motion-compensated prediction reference block for each block on the basis of the image data of the reference picture stored in the memory 128.

Each prediction reference block obtained by the motion prediction/motion compensation circuit 123 is sequentially supplied to the subtractor circuit 122. The subtractor circuit 122 performs subtraction processing for each block obtained in the blocking circuit 121 between the block and the prediction reference block to obtain a prediction error. The prediction error for each block is quantized after being integer-converted (for example, DCT-converted) by the integer conversion/quantization circuit 124.

Quantization data for each block obtained by the integer conversion/quantization circuit 124 is supplied to the inverse quantization/inverse integer conversion circuit 125. The inverse quantization/inverse integer conversion circuit 125 applies inverse quantization to the quantization data and further applies inverse integer conversion to obtain a prediction residual. The prediction error is supplied to the adder circuit 126.

The adder circuit 126 adds the motion-compensated prediction reference block to the prediction residual to obtain a block. This block is stored in the memory 128 after quantization noise is removed by the loop filter 127.

Furthermore, the quantization data for each block obtained by the integer conversion/quantization circuit 124 is supplied to the entropy coding circuit 129 where entropy coding is performed, and the first coded stream BS is obtained. Note that information such as the motion vector in each block is added to the first coded stream BS as MB header information for decoding on the reception side.

Furthermore, the image data of the UHD resolution and 120 fps input to the video encoder 102 is supplied to the blocking circuit 131 as the image data of the enhancement layer. In the blocking circuit 131, the image data of each picture of the enhancement layer is divided into blocks (macroblocks (MBs)) in units of coding processing. Each block is sequentially supplied to the subtractor circuit 132.

In the motion prediction/motion compensation circuit 133, the image data of the reference picture of the enhancement layer stored in the memory 140 is supplied through the switching circuit 134 in a case of performing intralayer prediction, and the prediction reference block for motion-compensated intralayer prediction is obtained by the block matching processing. "Motion vector 1" indicates the motion vector determined at this time.

Furthermore, in the motion prediction/motion compensation circuit 133, the image data of the reference picture of the base layer stored in the memory 128 is supplied through the conversion processing unit 153 and the switching circuit 134 in a case of performing interlayer prediction, and the prediction reference block for motion-compensated interlayer prediction is obtained by the block matching processing. The conversion processing unit 153 performs the scaling processing and the shaping processing as described above (see Figs. 6 and 7). "Motion vector 2" indicates the motion vector determined at this time, and includes two vectors of the interlayer vector (first motion vector) and the micro vector (second motion vector).

Each prediction reference block obtained by the motion prediction/motion compensation circuit 133 is sequentially supplied to the subtractor circuit 132. The subtractor circuit 132 performs subtraction processing for each block obtained in the blocking circuit 131 between the block and the prediction reference block to obtain a prediction error. The prediction error for each block is quantized after being integer-converted (for example, DCT-converted) by the integer conversion/quantization circuit 136.

Quantization data for each block obtained by the integer conversion/quantization circuit 136 is supplied to the inverse quantization/inverse integer conversion circuit 137. The inverse quantization/inverse integer conversion circuit 137 applies inverse quantization to the quantization data and further applies inverse integer conversion to obtain a prediction residual. The prediction error for each block is supplied to the adder circuit 138.

The adder circuit 138 adds the motion-compensated prediction reference block to the prediction residual to obtain a block. This block is stored in the memory 140 after quantization noise is removed by the loop filter 139.

Furthermore, the quantization data for each block obtained by the integer conversion/quantization circuit 136 is supplied to the entropy coding circuit 141 where entropy coding is performed, and the second coded stream ES is obtained. Note that information such as the motion vector in each block is added to the second coded stream ES as MB header information for decoding on the reception side.

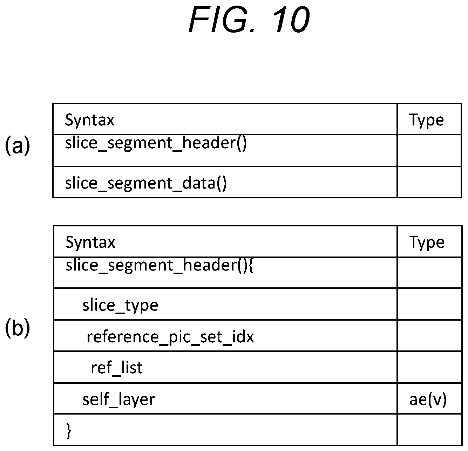

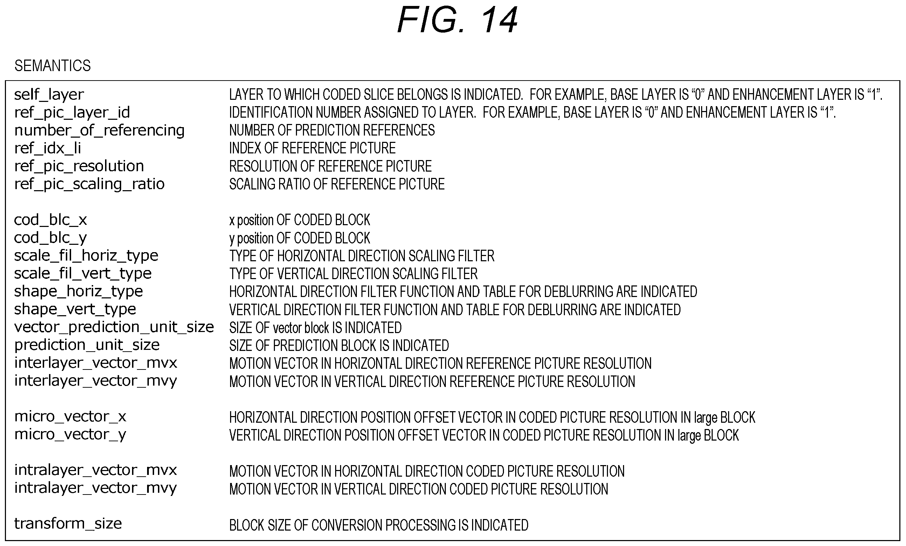

Fig. 10(a) illustrates a structure example of a NAL unit of a slice that contains coded data. This NAL unit includes a slice segment header (slice_segment_header()) and slice segment data (slice_segment_data()). Hereinafter, structure examples of the slice segment header and the slice segment data will be described. Note that Fig. 14 illustrates content (semantics) of main information in each structure example.

Fig. 10 (b) illustrates a structure example of the slice segment header. The field of "self_layer" indicates a layer to which a coded slice belongs. For example, the base layer is "0" and the enhancement layer is "1".

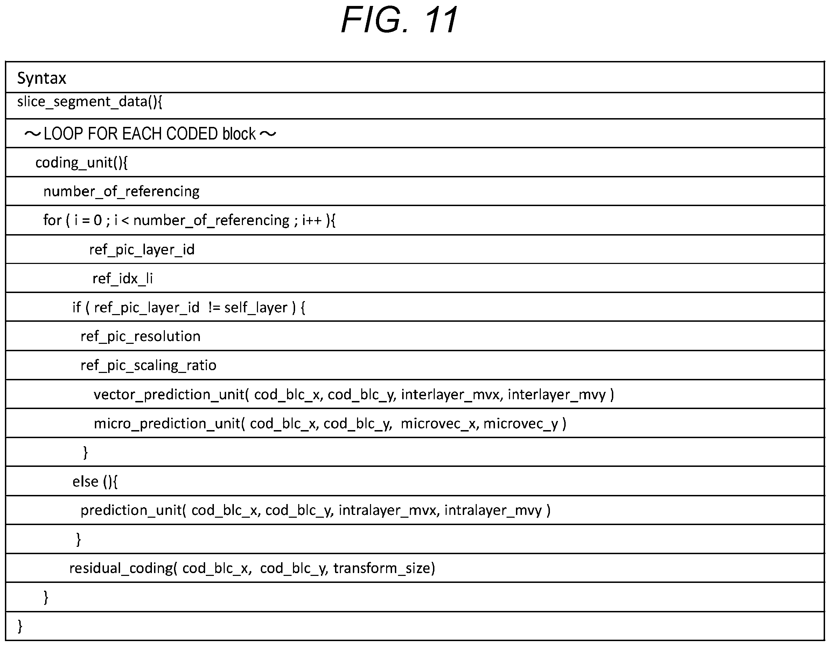

Fig. 11 illustrates a structure example of the slice segment data. The field of "number_of_referencing" indicates the number of prediction references. Information of the motion vectors and the like exists by the number. The field of "ref_pic_layer_id" indicates an identification number assigned to the layer of the reference picture. For example, the base layer is "0" and the enhancement layer is "1". The field of "ref_idx_li" indicates an index of the reference picture.

In a case where "self_layer" and "ref_pic_layer_id" are different, fields of "ref_pic_resolution", "ref_pic_scaling_ratio", "vector_prediction_unit(cod_blc_x, cod_blc_y, interlayer_mvx, interlayer_mvy)", and "micro_prediction_unit(cod_blc_x, cod_blc_y, microvec_x, microvec_y)" exist. The field of "ref_pic_resolution" indicates the resolution of the reference picture. The field of "ref_pic_scaling_ratio" indicates a scaling ratio of the reference picture.

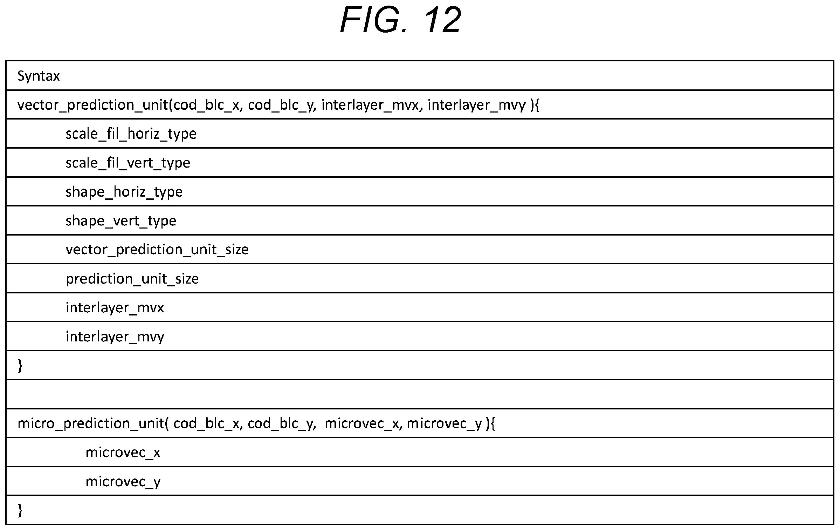

Fig. 12 illustrates a structure example of fields of "vector_prediction_unit(cod_blc_x, cod_blc_y, interlayer_mvx, interlayer_mvy)" and "micro_prediction_unit(cod_blc_x, cod_blc_y, microvec_x, microvec_y)". Here, "cod_blc_x" indicates an "x" position of the coded block (prediction block). Furthermore, "cod_blc_y" indicates a "y" position of the coded block (prediction block).

In the field of "vector_prediction_unit(cod_blc_x, cod_blc_y, interlayer_mvx, interlayer_mvy)", fields of "scale_fil_horiz_type", "scale_fil_vert_type", "shape_horiz_type", "shape_vert_type", "vector_prediction_unit_size", "prediction_unit_size", "interlayer_mvx", and "interlayer_mvy" exist.

The field of "scale_fil_horiz_type" indicates a type of a horizontal direction scaling filter. The field of "scale_fil_vert_type" indicates a type of a vertical direction scaling filter. The field of "shape_horiz_type" indicates horizontal direction filter function and table for deblurring. The field of "shape_vert_type" indicates vertical direction filter function and table for deblurring.

The field of "vector_prediction_unit_size" indicates a size of the vector block (see Fig. 6). The field of "prediction_unit_size" indicates a size of the prediction block (see Fig. 6). The field "interlayer_mvx" indicates a motion vector including the subpixel precision based on a horizontal direction reference picture resolution. The field "interlayer_mvy" indicates a motion vector including the sub-pixel precision based on a vertical direction reference picture resolution.

In the fields of "micro_prediction_unit(cod_blc_x, cod_blc_y, microvec_x, microvec_y)", fields of "microvec_x" and "microvec_y" exist. The field of "microvec_x" indicates a position offset vector in the horizontal direction including the subpixel precision based on the coded picture resolution in the large block. The field of "microvec_y" indicates a position offset vector in the vertical direction including the subpixel precision based on the coded picture resolution in the large block.

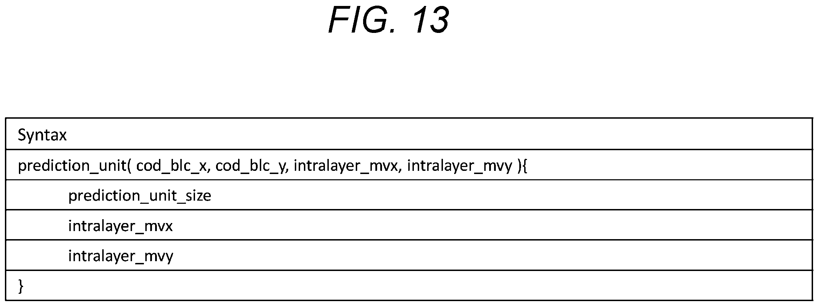

Referring back to Fig. 11, in a case where "self_layer" and "ref_pic_layer_id" are the same, a field of "prediction_unit(cod_blc_x, cod_blc_y, intralayer_mvx, intralayer_mvy)" exists. Fig. 13 illustrates a structure example of a field of "prediction_unit(cod_blc_x, cod_blc_y, intralayer_mvx, intralayer_mvy)". The field of "prediction_unit_size" indicates a size of the prediction block. The field of "intralayer_mvx" indicates a motion vector including the subpixel precision based on a horizontal direction coded picture resolution. The field of "intralayer_mvy" indicates a motion vector including the sub-pixel precision based on a vertical direction coded picture resolution.

Referring back to Fig. 11, in the field of "residual_coding(cod_blc_x, cod_blc_y, transform_size)", coded data obtained by integer conversion of the residual component obtained by motion prediction/motion compensation for each prediction block of the coded picture is arranged. The "transform_size" indicates a block size of conversion processing.

Note that, as described above, the vector precision is based on the assumption of subpixels and is described as one vector element. However, the vector of subpixels may be directly expressed by this vector and may be alternatively expressed as a pair of a vector of integer precision and a vector of decimal precision. Target elements are "interlayer_mvx", "interlayer_mvy", "intralayer_mvx", "intralayer_mvy", "microvec_x", and "microvec_y".

An operation of the transmission device 100 illustrated in Fig. 4 will be briefly described. The image data of the UHD resolution and 120 fps input to the video encoder 102 is supplied to the scaling unit 102a. The scaling unit 102a applies the scaling processing to the image data of the UHD resolution and 120 fps to obtain the image data of the base layer. This image data of the base layer is the image data of the HD resolution and 120 fps or the image data of the HD resolution and 60 fps.

The image data of the base layer obtained by the scaling unit 102a is supplied to the encoding unit 102b. The encoding unit 102b applies the motion compensation prediction coding processing such as H.264/AVC or H.265/HEVC to the image data of the base layer to obtain coded image data and generates the first coded stream BS having the coded image data.

Furthermore, the image data of the UHD resolution and 120 fps input to the video encoder 102, that is, the image data of the enhancement layer, is supplied to the encoding unit 102e. The encoding unit 102e applies the intralayer and interlayer motion compensation prediction coding processing such as H.264/AVC or H.265/HEVC to the image data of the enhancement layer to obtain coded image data and generates the second coded stream ES having the coded image data.

In this case, the encoding unit 102e can use a picture of the base layer as the reference picture in encoding the image data of each picture of the enhancement layer. In this case, when the picture of the base layer is used as the reference picture, conversion processing (the scaling processing and the shaping processing) for causing the image data of the base layer to correspond to the image data of the enhancement layer is applied to the reference block of the reference picture to perform the motion compensation prediction coding processing.

The first coded stream BS obtained by the encoding unit 102b and the second coded stream ES obtained by the encoding unit 102e are supplied to the system encoder 103. The system encoder 103 performs the PES packetization and TS packetization for the first coded stream BS and the second coded stream ES generated in the video encoder 102 to generate the transport stream TS. Then, the transmission unit 104 transmits the transport stream TS to the reception device 200, placing the transport stream TS on a broadcast wave or a net packet.

### [Configuration of Reception Device]

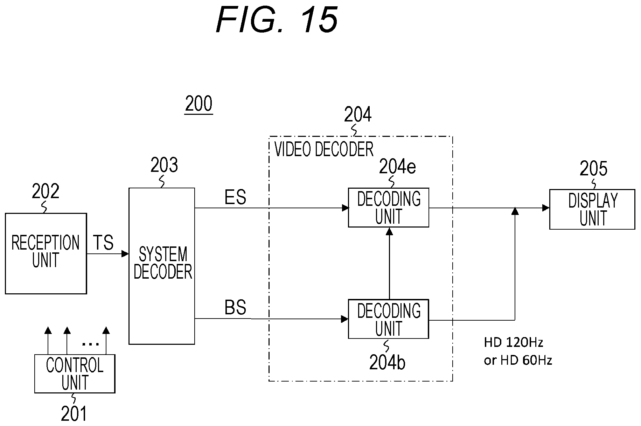

Fig. 15 illustrates a configuration example of the reception device 200. The reception device 200 corresponds to the configuration example of the transmission device 100 in Fig. 4. The reception device 200 includes a control unit 201, a reception unit 202, a system decoder 203, a video decoder 204, and a display unit 205.

The control unit 201 includes a central processing unit (CPU), and controls operation of each unit of the reception device 200 on the basis of a control program. The reception unit 202 receives the transport stream TS sent on the broadcast wave or the packet from the transmission device 100. The system decoder 203 extracts the first coded stream BS and the second coded stream ES from this transport stream TS.

The video decoder 204 includes a decoding unit 204b and a decoding unit 204e. The decoding unit 204b applies decoding processing to the first coded stream BS to obtain the image data of the base layer. The decoding unit 204b performs prediction compensation in the base layer when decoding the image data of each picture of the base layer.

Here, in a case where the configuration of the base layer is illustrated in the configuration example in Fig. 2, the image data of the HD resolution and 120 fps can be obtained as the image data of the base layer. Meanwhile, in a case where the configuration of the base layer is illustrated in the configuration example in Fig. 3, the image data of the HD resolution and 60 fps is obtained as the image data of the base layer.

The decoding unit 204e applies decoding processing to the second coded stream BS to obtain the image data of the 4K resolution and 120 fps as the image data of the enhancement layer. When decoding the image data of each picture of the enhancement layer, the decoding unit 204e selectively performs prediction compensation in the enhancement layer or prediction compensation between the enhancement layer and the base layer.

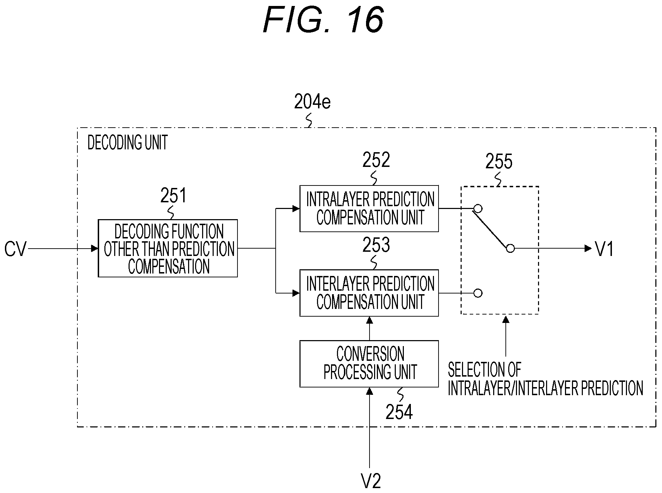

Fig. 16 illustrates a configuration example of main parts of the decoding unit 204e. The decoding unit 204e performs processing reverse to the processing of the encoding unit 102e in Fig. 4. The decoding unit 204e includes a decoding function unit 251, an intralayer prediction compensation unit 252, an interlayer prediction compensation unit 253, a conversion processing unit 254, and a selection unit 255.

The decoding function unit 251 performs decoding processing other than prediction compensation for coded image data CV to obtain prediction residual data. The intralayer prediction compensation unit 252 performs prediction compensation in the image data V1 of the enhancement layer (intralayer prediction compensation) for the prediction residual data to obtain the image data V1. The interlayer prediction compensation unit 253 performs prediction compensation for the prediction residual data with the image data V2 of the base layer to be referred (interlayer prediction compensation) to obtain the image data V1.

The conversion processing unit 254 performs the scaling processing and the shaping processing similarly to the conversion processing unit 153 of the encoding unit 102e in Fig. 5 although detailed description is omitted. These characteristics are set similarly to the transmission side by characteristic information (see Fig. 12) added to and sent with the coded image data CV. The selection unit 255 selectively takes out and outputs the image data V1 obtained by the intralayer prediction compensation unit 252 or the image data V1 obtained in the interlayer prediction compensation unit 253 for each coded block (prediction block) corresponding to the prediction at the time of encoding.

Referring back to Fig. 15, the display unit 205 is configured by, for example, a liquid crystal display (LCD), an organic electro-luminescence (EL) panel, or the like. The display unit 205 displays an image based on the image data of the base layer obtained by the decoding unit 204b or an image based on the image data of the enhancement layer obtained by the decoding unit 204e according to display capability.

Note that, in the reception device 200 having the display capability corresponding to the image data of the base layer, configuration in which the system decoder 203 extracts only the first coded stream BS and the video decoder 204 performs only the decoding processing for the first coded stream BS can be considered.

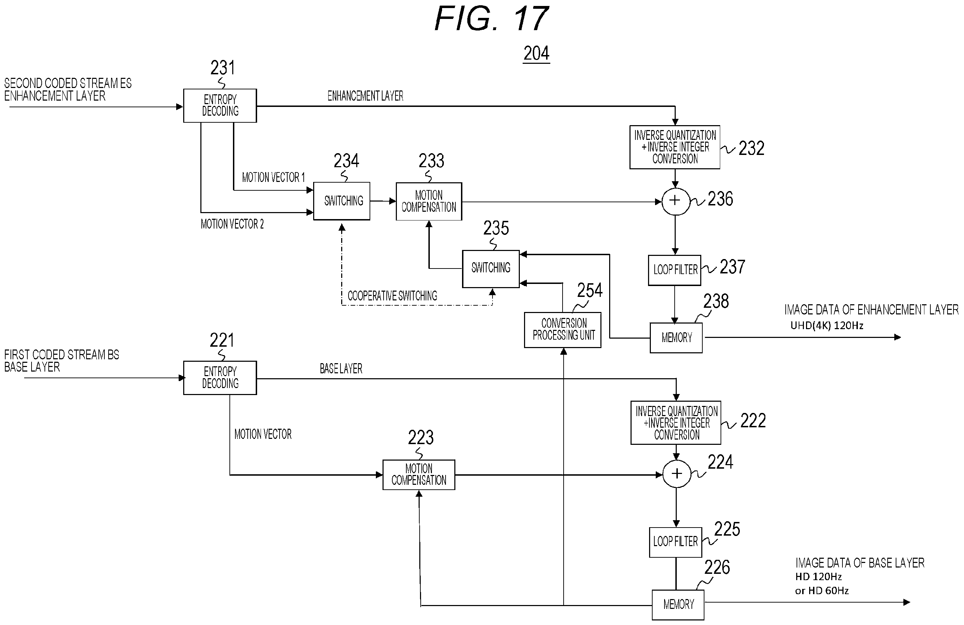

Fig. 17 illustrates a more specific configuration example of the video decoder 204. The video decoder 204 includes an entropy decoding circuit 221, an inverse quantization/inverse integer conversion circuit 222, a motion compensation circuit 223, an adder circuit 224, a loop filter 225, and a memory 226. Here, the entropy decoding circuit 221 to the memory 226 configure the decoding unit 204b (see Fig. 15).

Furthermore, the video decoder 204 includes an entropy decoding circuit 231, an inverse quantization/inverse integer conversion circuit 232, a motion compensation circuit 233, switching circuits 234 and 235, an adder circuit 236, a loop filter 237, a memory 238, and a conversion processing unit 254. Here, the entropy decoding circuit 231 to the memory 238 and the conversion processing unit 254 configure the decoding unit 204e (see Fig. 15).

The entropy decoding circuit 221 applies entropy decoding to the first coded stream BS to obtain quantization data for each block of the base layer. This quantization data is supplied to the inverse quantization/inverse integer conversion circuit 222. The inverse quantization/inverse integer conversion circuit 222 applies inverse quantization to the quantization data and further applies inverse integer conversion to obtain a prediction residual. The prediction error for each block is supplied to the adder circuit 224.

The motion compensation circuit 223 obtains a motion-compensated compensation reference block on the basis of the image data of the reference picture stored in the memory 226. Here, motion compensation is performed using the motion vector included as the MB header information. In the adder circuit 224, the compensation reference block is added to the prediction residual to obtain a block configuring the image data of each picture of the base layer.

The block obtained by the adder circuit 224 in this manner is accumulated in the memory 226 after quantization noise is removed by the loop filter 225. Then, by reading the accumulated data from the memory 226, the image data of the HD resolution and 120 fps or the image data of the HD resolution and 60 fps can be obtained as the image data of the base layer.

Furthermore, the entropy decoding circuit 231 applies entropy decoding to the second coded stream ES to obtain quantization data for each block of the enhancement layer. This quantization data is supplied to the inverse quantization/inverse integer conversion circuit 232. The inverse quantization/inverse integer conversion circuit 232 applies inverse quantization to the quantization data and further applies inverse integer conversion to obtain a prediction residual. The prediction error for each block is supplied to the adder circuit 236.

The motion compensation circuit 233 selectively performs prediction compensation in the enhancement layer or prediction compensation between the enhancement layer and the base layer. When the prediction compensation in the enhancement layer is performed, the motion compensation circuit 233 obtains motion-compensated compensation reference block for intralayer compensation on the basis of the "motion vector 1" extracted from the MB header information by the entropy decoding circuit 231 and the image data of the reference picture stored in the memory 238. In this case, the "motion vector 1" is supplied from the entropy decoding circuit 231 to the motion compensation circuit 233 through the switching circuit 234, and the image data of the reference picture is supplied from the memory 238 to the motion compensation circuit 233 through the switching circuit 235.

Meanwhile, when the prediction compensation between the enhancement layer and the base layer is performed, the motion compensation circuit 233 obtains motion-compensated compensation reference block for interlayer compensation on the basis of the "motion vector 2" extracted from the MB header information by the entropy decoding circuit 231 and the image data of the reference picture stored in the memory 226. As described above, the "motion vector 2" includes the two motion vectors: the interlayer motion vector (first motion vector) and the micro vector (second motion vector).

In this case, the "motion vector 2" is supplied from the entropy decoding circuit 231 to the motion compensation circuit 233 through the switching circuit 234, and the image data of the reference picture is supplied from the memory 226 to the motion compensation circuit 233 through the conversion processing unit 254 and the switching circuit 235. The conversion processing unit 254 performs the scaling processing and the shaping processing similarly to the conversion processing unit 153 (see Fig. 9) in the encoder 102, as described above.

In the adder circuit 236, the compensation reference block obtained by the motion compensation circuit 233 is added to the prediction residual to obtain a block configuring the image data of each picture of the enhancement layer. This block is stored in the memory 238 after quantization noise is removed by the loop filter 237. Then, by reading the accumulated data from the memory 238, the image data of the UHD resolution and 120 fps can be obtained as the image data of the enhancement layer.

An operation of the reception device 200 illustrated in Fig. 15 will be briefly described. The reception unit 202 receives the transport stream TS sent on the broadcast wave or the packet from the transmission device 100. The transport stream TS is supplied to the system decoder 203.

The system decoder 203 extracts the first coded stream BS and the second coded stream ES from the transport stream TS. The first coded stream BS is supplied to the decoding unit 204b of the video decoder 204. Furthermore, the second coded stream ES is supplied to the decoding unit 204e of the video decoder 204.

The decoding unit 204b applies the decoding processing to the first coded stream BS to obtain the image data of the HD resolution and 120 fps or the image data of the HD resolution and 60 fps, as the image data of the base layer. The decoding unit 204b performs prediction compensation in the base layer when decoding the image data of each picture of the base layer.

The decoding unit 204e applies the decoding processing to the second coded stream ES to obtain the image data of the 4K resolution and 120 fps as the image data of the enhancement layer. When decoding the image data of each picture of the enhancement layer, the decoding unit 204e selectively performs prediction compensation in the enhancement layer or prediction compensation between the enhancement layer and the base layer.

In a case where the display unit 205 can only display an image based on the image data of the base layer, the image data of the base layer obtained by the decoding unit 204b is supplied to the display unit 205, and the image based on the image data is displayed. Meanwhile, in a case where the display unit 205 can display an image based on the image data of the enhancement layer, the image data of the enhancement layer obtained by the decoding unit 204e is supplied to the display unit 205, and a high-quality (high-resolution in this example) image based on the image data is displayed.

As described above, in the transmission/reception system 10 illustrated in Fig. 1, when using a picture of the base layer as the reference picture in encoding the image data of each picture of the enhancement layer, the transmission device 100 applies the scaling processing for causing the image data of the base layer to correspond to the image data of the enhancement layer to a block of the reference picture to perform the motion compensation prediction coding processing. Therefore, the reference block can be determined with high precision, and the coding efficiency can be improved.

Furthermore, in the transmission/reception system 10 illustrated in Fig. 1, the transmission device 100 further performs the shaping processing of correcting a blunt edge of the scaled image data. Therefore, blurring of the edge of the image due to the scaling processing can be reduced, and the effect of the block matching processing for obtaining a motion vector can be enhanced.

Furthermore, in the transmission/reception system 10 illustrated in Fig. 1, the transmission device 100 performs the block matching processing using the scaled reference block for each vector block to determine the first motion vector, and performs the block matching processing with each of the prediction blocks in the scaled reference block to determine the second motion vector corresponding to each of the prediction blocks, and performs the motion compensation prediction coding processing. Therefore, the motion vector corresponding to each prediction block can be obtained with high precision, and the coding efficiency can be improved.

### <2. Modification>

Note that, in the above-described embodiment, an example of scalable coding where the image data of the base layer is the image data of the HD resolution and 60 Hz and the image data of the enhancement layer is the image data of the UHD (4K) resolution and 120 Hz has been described. However, the present technology is similarly applicable to another scalable coding.

For example, scalable coding where the image data of the base layer is image data of SDR (normal dynamic range) and 60 Hz and the image data of the enhancement layer is image data of HDR (high dynamic range) and 120 Hz may be adopted.

In this case, for example, in the encoder 102 in Fig. 9, the scaling unit 102a performs scaling of the dynamic range instead of scaling of the resolution, that is, conversion from the high dynamic range to the normal dynamic range, or conversion to the scaling of the dynamic range in addition to the scaling of the resolution. With the conversion, SDR image data of UHD and 120 Hz, SDR image data of UHD and 60 Hz, SDR image data of HD and 120 Hz, or SDR image data of HD and 60 Hz is obtained from the HDR image data of UHD and 120 Hz input to the encoder 102.

Furthermore, the conversion processing unit 153 performs processing of converting a pixel value of a block of the reference picture of the normal dynamic range to correspond to a pixel value of the high dynamic range, instead of the scaling processing and the shaping processing of the resolution in the above-described embodiment.

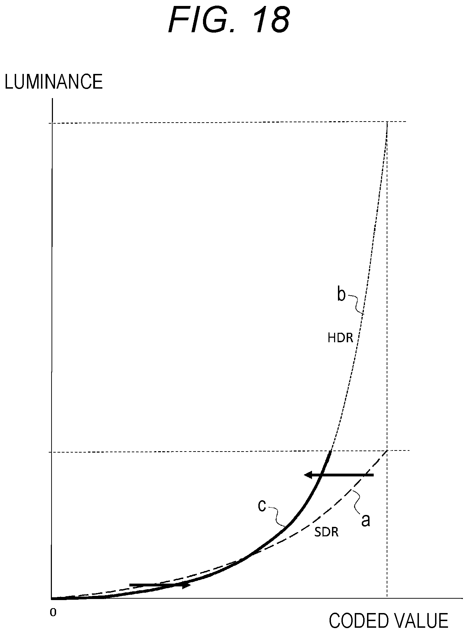

This conversion processing will be further described using a diagram illustrating an HDR characteristic and an SDR characteristic in Fig. 18. The curve a represents an SDR conversion curve. The curve b represents an HDR conversion curve. In the conversion processing, pixel value conversion is performed for the curve a of SDR coded values to obtain a curve c tracing the curve b of HDR coded values such that luminance levels become equal. This conversion characteristic can be defined by a function f (x) but can also be defined as table information.

Furthermore, in the above-described embodiment, the transmission/reception system 10 including the transmission device 100 and the reception device 200 has been described. However, a configuration of a transmission/reception system to which the present technology can be applied is not limited to the transmission/reception system 10. For example, the reception device 200 may have a configuration of a set top box and a monitor connected by a digital interface such as high-definition multimedia interface (HDMI). Note that "HDMI" is a registered trademark.

Furthermore, in the above-described embodiment, an example in which the container is a transport stream (MPEG-2 TS) has been described. However, the present technology is similarly applicable to a system configured to be distributed to a reception terminal using a network such as the Internet. In the Internet distribution, data is often distributed in containers of MP4 or other formats. That is, the containers correspond to containers of various formats such as transport stream (MPEG-2 TS) or MPEG media transport (MMT) adopted in digital broadcasting standard, and ISOBMFF (MP4) used in the Internet distribution.

Furthermore, the present technology can also have the following configurations.
(1) A transmission device including:
   an image coding unit configured to encode image data of each picture of a base layer to generate a first coded stream and encode image data of each picture of an enhancement layer to generate a second coded stream; and
   a transmission unit configured to transmit a container including the first coded stream and the second coded stream, in which
   the image coding unit
   is able to use a picture of the base layer as a reference picture in encoding the image data of each picture of the enhancement layer, and
   applies conversion processing for causing the image data of the base layer to correspond to the image data of the enhancement layer to a block of the reference picture to perform motion compensation prediction coding processing when using the picture of the base layer as the reference picture.
(2) The transmission device according to (1), in which
   the image data of each picture of the enhancement layer includes image data of a picture having different display timing from each picture of the base layer.
(3) The transmission device according to (1) or (2), in which
   the image data of the base layer is image data of a first resolution, and the image data of the enhancement layer is image data of a second resolution larger than the first resolution, and
   the image coding unit performs, as the conversion processing, scaling processing of changing a resolution of a reference block in the reference picture from the first resolution to the second resolution.
(4) The transmission device according to (3), in which
   the image coding unit further performs, as the conversion processing, shaping processing of correcting a blunt edge of an image, for the scaled image data.
(5) The transmission device according to (3) or (4), in which
   the first resolution is an HD resolution, and the second resolution is a UHD resolution.
(6) The transmission device according to (5), in which
   the UHD resolution is a 4K resolution, and
   the image coding unit
   performs block matching processing using the scaled reference block, for each vector block configured by two-dimensionally adjacent 2 × 2 four prediction blocks of a picture of the enhancement layer, to determine a first motion vector, and performs block matching processing with each of the four prediction blocks in the scaled reference block to determine a second motion vector corresponding to each of the prediction blocks, and performs the motion compensation prediction coding processing.
(7) The transmission device according to any one of (1) to (6), in which
   the image data of the base layer is image data of a first dynamic range, and the image data of the enhancement layer is image data of a second dynamic range wider than the first dynamic range, and
   the image coding unit performs, as the conversion processing, processing of converting a pixel value of the block of the reference picture to correspond to a pixel value of the second dynamic range.
(8) A transmission method including:
   an image coding step of, by an image coding unit, encoding image data of each picture of a base layer to generate a first coded stream, and encoding image data of each picture of an enhancement layer to generate a second coded stream; and
   a transmission step of, by a transmission unit, transmitting a container including the first coded stream and the second coded stream, in which,
   in the image coding step,
   a picture of the base layer is able to be used as a reference picture in encoding the image data of each picture of the enhancement layer, and
   conversion processing for causing the image data of the base layer to correspond to the image data of the enhancement layer is applied to a block of the reference picture to perform motion compensation prediction coding processing when the picture of the base layer is used as the reference picture.
(9) A reception device including:
   a reception unit configured to receive a container including a first coded stream obtained by encoding image data of each picture of a base layer and a second coded stream obtained by encoding image data of each picture of an enhancement layer, in which
   a picture of the base layer is able to be used as a reference picture in encoding the image data of each picture of the enhancement layer, and conversion processing for causing the image data of the base layer to correspond to the image data of the enhancement layer is applied to a block of the reference picture to perform motion compensation prediction coding processing when the picture of the base layer is used as the reference picture, and
   the reception device further includes
   a processing unit configured to process the first coded stream, or the first coded stream and the second coded stream, according to display capability, to obtain display image data.
(10) A reception method including:
   a reception step of, by a reception unit, receiving a container including a first coded stream obtained by encoding image data of each picture of a base layer and a second coded stream obtained by encoding image data of each picture of an enhancement layer, in which
   a picture of the base layer is able to be used as a reference picture in encoding the image data of each picture of the enhancement layer, and conversion processing for causing the image data of the base layer to correspond to the image data of the enhancement layer is applied to a block of the reference picture to perform motion compensation prediction coding processing when the picture of the base layer is used as the reference picture, and
   the reception method further includes
   a processing step of, by a processing unit, processing the first coded stream, or the first coded stream and the second coded stream, according to display capability, to obtain display image data.

A main characteristic of the present technology is, when using a picture of a base layer as a reference picture in encoding image data of each picture of an enhancement layer, to apply conversion processing for causing image data of the base layer to correspond to the image data of the enhancement layer, to a block of the reference picture, to perform motion compensation prediction coding processing, thereby to determine a reference block with high precision and improve the coding efficiency (see Figs. 3 and 6).

### REFERENCE SIGNS LIST

10 Transmission/reception system
100 Transmission device
101 Control unit
102 Video encoder
102a Scaling unit
102b, 102e Encoding unit
103 System encoder
104 Transmission unit
121 Blocking circuit
122 Subtractor circuit
123 Motion prediction/motion compensation circuit
124 Integer conversion/quantization circuit
125 Inverse quantization/inverse integer conversion circuit
126 Adder circuit
127 Loop filter
128 Memory
129 Entropy coding circuit
131 Blocking circuit
132 Subtractor circuit
133 Motion prediction/motion compensation circuit
134 Switching circuit
135 Conversion processing unit
136 Integer conversion/quantization circuit
137 Inverse quantization/inverse integer conversion circuit
138 Adder circuit
139 Loop filter
140 Memory
141 Entropy coding circuit
151 Intralayer prediction unit
152 Interlayer prediction unit
153 Conversion processing unit
154 Selection unit
155 Encoding function unit
200 Reception device
201 Control unit
202 Reception unit
203 System decoder
204 Video decoder
204b Decoding unit
204e Decoding unit
205 Display unit
221 Entropy decoding circuit
222 Inverse quantization/inverse integer conversion circuit
223 Motion compensation circuit
224 Adder circuit
225 Loop filter
226 Memory
231 Entropy decoding circuit
232 Inverse quantization/inverse integer conversion circuit
233 Motion compensation circuit
234, 235 Switching circuit
236 Adder circuit
237 Loop filter
238 Memory
251 Decoding function unit
252 Intralayer prediction compensation unit
253 Interlayer prediction compensation unit
254 Conversion processing unit
255 Selection unit

## Claims

1. A transmission device comprising:
an image coding unit configured to encode image data of each picture of a base layer to generate a first coded stream and encode image data of each picture of an enhancement layer to generate a second coded stream; and
a transmission unit configured to transmit a container including the first coded stream and the second coded stream, wherein
the image coding unit
is able to use a picture of the base layer as a reference picture in encoding the image data of each picture of the enhancement layer, and
applies conversion processing for causing the image data of the base layer to correspond to the image data of the enhancement layer to a block of the reference picture to perform motion compensation prediction coding processing when using the picture of the base layer as the reference picture.

2. The transmission device according to claim 1, wherein
the image data of each picture of the enhancement layer includes image data of a picture having different display timing from each picture of the base layer.

3. The transmission device according to claim 1, wherein
the image data of the base layer is image data of a first resolution, and the image data of the enhancement layer is image data of a second resolution larger than the first resolution, and
the image coding unit performs, as the conversion processing, scaling processing of changing a resolution of a reference block in the reference picture from the first resolution to the second resolution.

4. The transmission device according to claim 3, wherein
the image coding unit further performs, as the conversion processing, shaping processing of correcting a blunt edge of an image, for the scaled image data.

5. The transmission device according to claim 3, wherein
the first resolution is an HD resolution, and the second resolution is a UHD resolution.

6. The transmission device according to claim 5, wherein
the UHD resolution is a 4K resolution, and
the image coding unit
performs block matching processing using the scaled reference block, for each vector block configured by two-dimensionally adjacent 2 × 2 four prediction blocks of a picture of the enhancement layer, to determine a first motion vector, and performs block matching processing with each of the four prediction blocks in the scaled reference block to determine a second motion vector corresponding to each of the prediction blocks, and performs the motion compensation prediction coding processing.

7. The transmission device according to claim 1, wherein
the image data of the base layer is image data of a first dynamic range, and the image data of the enhancement layer is image data of a second dynamic range wider than the first dynamic range, and
the image coding unit performs, as the conversion processing, processing of converting a pixel value of the block of the reference picture to correspond to a pixel value of the second dynamic range.

8. A transmission method comprising:
an image coding step of, by an image coding unit, encoding image data of each picture of a base layer to generate a first coded stream, and encoding image data of each picture of an enhancement layer to generate a second coded stream; and
a transmission step of, by a transmission unit, transmitting a container including the first coded stream and the second coded stream, wherein,
in the image coding step,
a picture of the base layer is able to be used as a reference picture in encoding the image data of each picture of the enhancement layer, and
conversion processing for causing the image data of the base layer to correspond to the image data of the enhancement layer is applied to a block of the reference picture to perform motion compensation prediction coding processing when the picture of the base layer is used as the reference picture.

9. A reception device comprising:
a reception unit configured to receive a container including a first coded stream obtained by encoding image data of each picture of a base layer and a second coded stream obtained by encoding image data of each picture of an enhancement layer, wherein
a picture of the base layer is able to be used as a reference picture in encoding the image data of each picture of the enhancement layer, and conversion processing for causing the image data of the base layer to correspond to the image data of the enhancement layer is applied to a block of the reference picture to perform motion compensation prediction coding processing when the picture of the base layer is used as the reference picture, and
the reception device further comprises
a processing unit configured to process the first coded stream, or the first coded stream and the second coded stream, according to display capability, to obtain display image data.

10. A reception method comprising:
a reception step of, by a reception unit, receiving a container including a first coded stream obtained by encoding image data of each picture of a base layer and a second coded stream obtained by encoding image data of each picture of an enhancement layer, wherein
a picture of the base layer is able to be used as a reference picture in encoding the image data of each picture of the enhancement layer, and conversion processing for causing the image data of the base layer to correspond to the image data of the enhancement layer is applied to a block of the reference picture to perform motion compensation prediction coding processing when the picture of the base layer is used as the reference picture, and
the reception method further comprises
a processing step of, by a processing unit, processing the first coded stream, or the first coded stream and the second coded stream, according to display capability, to obtain display image data.
